# EUROPÄISCHE PATENTSCHRIFT

(11) **EP 1 735 551 B1**
(45) Veröffentlichungstag und Bekanntmachung des Hinweises auf die Patenterteilung: **10.12.2008**
(21) Anmeldenummer: 05717102.7
(22) Anmeldetag: 18.03.2005
(51) Int. Cl.: F16J 15/00

(54) **DICHTUNGSANORDNUNG, INSBESONDERE FÜR EINE TROCKENANORDNUNG**
SEALING ARRANGEMENT, PARTICULARLY FOR A DRYING SYSTEM
DISPOSITIF D'ETANCHEIFICATION, EN PARTICULIER POUR DISPOSITIF DE SECHAGE

(30) Priorität: 13.04.2004 DE 102004017817
(43) Veröffentlichungstag der Anmeldung: 27.12.2006
(73) Patentinhaber: Voith Patent GmbH, 89522 Heidenheim (DE)
(72) Erfinder: GRUBER-NADLINGER, Thomas, A-3442 Langenrohr (AT); HAASE, Christoph, A-3041 Asperhofen (AT)
(86) Internationale Anmeldenummer: PCT/EP2005/051268
(87) Internationale Veröffentlichungsnummer: WO 2005/100828

(56) Entgegenhaltungen:
- DE-U- 9 014 461
- US-A- 4 343 591
- US-A1- 2004 056 423

## Beschreibung

Die Erfindung betrifft eine Trockenanordnung mit einem beheizten Zylinder zur Aufheizung einer Papier-, Karton-, Tissue- oder einer anderen Faserstoffbahn in einer Maschine zur Herstellung und/oder Veredlung der Faserstoffbahn, oberhalb dessen ein wenigstens teilweise auf dem Zylinder abgestütztes Maschinenelement, insbesondere eine Druckhaube, angeordnet ist, wobei zwischen dem Maschinenelement und dem Zylinder mindestens ein umlaufendes undurchlässiges Band geführt wird und mit einer Dichtungsanordnung zum Abdichten der, ein unter Druck stehendes Medium enthaltenden Druckhaube gegenüber dem Zylinder mit einer ersten, zwischen den beiden Bauelementen liegenden Dichtung.

Schleifende Dichtungen, die einen bewegten Körper gegen einen unbewegten Körper abdichten oder umgekehrt den unbewegten Körper gegen den bewegten Körper abdichten, verschleißen sehr schnell aufgrund der zwischen den beiden Körpern bestehenden Gleitreibung. Somit müssen die Dichtungen oft gewechselt werden; dies verursacht kostspielige Stillstandszeiten. Besonders hoher Verschleiß entsteht dann, wenn die Dichtung trocken läuft und wenn der Druck, gegen den abgedichtet werden muss, hoch ist.

In der Papierindustrie müssen schleifende Dichtungen sehr hohe Standzeiten aufweisen, die beispielsweise drei Monate betragen. Schleifende Dichtungen, die gegenüber einem Innendruck von mehr als 0,5 bar (Überdruck) abdichten müssen, können normalerweise über diese lange Betriebsdauer nur bei Einsatz eines Schmiermediums standhalten. Dieses Schmiermedium kann jedoch, wenn es auf die in der Papiermaschine herzustellende Papierbahn gelangt, zu Bahnabrissen der Papierbahn führen. Es ist daher notwendig, im Bereich einer Dichtung zwischen einem feststehenden Bauelement und einem sich gegenüber diesem bewegenden Bauelement, beispielsweise einem Zylinder oder einem Band, ausgetretenes Schmiermedium wieder zu entfernen. Dies ist aufwendig und nicht immer vollständig möglich.

Wenn eine vollständige Abdichtung zwischen den beiden Bauelementen erreicht werden soll, muss auf die Dichtfläche zwischen ihnen ein höherer Druck als auf einen zwischen ihnen bestehenden Innenraum aufgebracht werden. Die Dichtffäche ist dann allerdings zumindest über einen gewissen Bereich trocken, was wiederum zu einer Verkürzung der Standzeit führt. Hohe Standzeiten sind allenfalls dann möglich, wenn der Innendruck, d. h. der Überdruck, ziemlich gering ist, beispielsweise niedriger als 0,5 bar.

Aus den Druckschriften US 4,343,591, DE 90 14 461 und US 2004/056423 sind Dichtungsanordnungen bekannt, die allerdings für andere Einsatzzwecke als im vorliegenden Fall verwendet werden.

Es ist die Aufgabe der Erfindung, eine Trocknungsanordnung zu schaffen, die eine gute Abdichtung zwischen zwei Bauelementen aufweist.

Erfindungsgemäß wird diese Aufgabe bei einer Trocknungsanordnung mit einer Dichtungsanordnung der eingangs genannten Art dadurch gelöst, dass die erste Dichtung durch das Medium geschmiert wird und dass eine zweite Dichtung vorgesehen ist, die von der ersten Dichtung durch eine Zwischenkammer getrennt und in der Richtung, in der das Medium aus der Druckkammer entweicht, der ersten Dichtung und der Zwischenkammer nachgeordnet und für das Medium undurchlässig ist.

Die erfindungsgemäße Trocknungsanordnung mit Dichtungsanordnung weist gegenüber bekannten Dichtungsanordnungen eine hervorragende Abdichtung auf, da zwei Dichtungen hintereinander angeordnet sind.

Bei dieser Trockenanordnung wird die feuchte Faserstoffbahn über den Trockenzylinder geführt; durch die Erwärmung tritt Feuchtigkeit aus der Faserstoffbahn aus und wird in Richtung des von der Druckhaube gebildeten Druckraums abgeführt. Der Wasserdampf kondensiert an einer zwischen der Druckhaube und der Faserstoffbahn zusammen mit dieser bewegten wasserundurchlässigen Bespannung.

Wenn die erste Dichtung eine gewisse Undichtigkeit aufweist, kann ein zwischen ihr und dem Zylinder austretendes Medium, insbesondere wenn es eine Flüssigkeit ist, die Fläche, an der die erste Dichtung auf der Oberfläche des Zylinders gleitet, schmieren und dadurch die Reibung vermindern. Ein weiterer Effekt der doppelten Dichtungen besteht im stufenweisen Abbau des Drucks, den das Medium im Innern der Druckhaube ausübt. Es versteht sich und liegt im Rahmen dieser Erfindung, dass auch mehr als zwei Dichtungen in Reihe nacheinander angeordnet sein können, um sukzessiv ein unter einem sehr hohen Druck stehendes Fluid gegenüber der Außenwelt abzudichten. Dies gilt um so mehr, wenn die abzudichtende Fläche am Übergang zwischen einem feststehenden und einem bewegten Körper liegt.

Erfindungsgemäß tritt durch den von dem ersten Dichtelement mit dem Zylinder gebildeten Dichtspalt eine geringe Menge eines unter Druck stehenden Mediums hindurch. Infolge des Drucks in dem Innenraum wird das Medium in den Dichtspalt hineingedrückt, und die Dichtung wird durch das Medium geschmiert. Es erfolgt ein Druckabfall zwischen dem eigentlichen Druckraum und einem Zwischenraum, durch den das Druckmedium drucklos oder unter einem sehr viel niedrigeren Druck ausfließen kann. Aus diesem Zwischenraum lässt es sich in einer Ausgestaltung der Erfindung auch abpumpen.

Vorteilhafte Weiterbildungen der Erfindung ergeben sich aus den Unteransprüchen, der Beschreibung und den Zeichnungen.

In einer vorteilhaften Ausgestaltung der Erfindung steht das Medium unter einem Überdruck von 0,5 bar oder unter einem höheren Druck, insbesondere unter einem Überdruck von bis zu 5 bar.

Als vorteilhaft erweist es sich auch, wenn die erste Dichtung mit einer dem Druck des Mediums wenigstens im wesentlichen entsprechenden Anpresskraft gegen den Zylinder drückbar ist. Alternativ ist vorgesehen, dass die erste Dichtung einen schmalen Spalt gegenüber der Oberfläche des Zylinders aufweist, durch den das Druckmedium fließt.

Ein Dauerbetrieb der Dichtungsanordnung wird ermöglicht, wenn sich das Medium aus der Zwischenkammer über eine Bohrung abpumpen lässt. Bei einem Überdruck in der Zwischenkammer läßt sich das Medium auch ohne Pumpe abführen.

Besonders geeignet ist auch eine Anordnung, bei der die zweite Dichtung mit einem geringen Druck, insbesondere mit einem Druck von weniger als 2 bar, gegen den Zylinder gedrückt wird.

Beide Dichtungen werden vorzugsweise pneumatisch, hydraulisch oder mechanisch, beispielsweise durch eine Feder gegen die Oberfläche des Zylinders angepresst. Die zweite Dichtung wird entweder trocken oder mit einer geringen Leckage des abzudichtenden Mediums betrieben. Diese Dichtung muss daher nur gegen einen geringen Druck des Zwischenraums abdichten. Dadurch, dass sie mit einer nur geringen Anpresskraft betrieben wird, ist sie einem deutlich geringeren Verschleiß als die erste Dichtung ausgesetzt. Aber auch deren Verschleiß ist durch die Schmierung durch das entweichende Medium gegenüber herkömmlichen Dichtungen vermindert.

Bei Anpressung der Dichtungen durch ein Fluid, insbesondere bei pneumatischer Anpressung, ist eine Anpassung der Dichtungen an eine sich verändernde Kontur des sich bewegenden Zylinders oder eines über diesen geführten Bandes, möglich. Dies ist vorteilhaft, weil sich dadurch beispielsweise Dickenschwankungen eines solchen Bandes ausgleichen lassen.

Die Dichtungsanordnung lässt sich auch noch bei sehr hohen Temperaturen betreiben; die Temperatur kann bis zu 100° C erreichen.

Die Dichtungsanordnung lässt sich auch dann erfolgreich einsetzen, wenn sich der Zylinder dreht oder gegenüber der Druckhaube eine gleitende Bewegung vollzieht.

Insgesamt bestehen die Vorteile der erfindungsgemäßen Anordnung in einer einfachen, kostengünstigen Konstruktion und einer langen, mit der Betriebsdauer einer geschmierten oder gefluteten Dichtung vergleichbaren Lebens- und Betriebsdauer, weil der Druck über die beiden oder mehr Dichtungen schrittweise abgebaut wird und die äußere Dichtung als "trockene" Dichtung mit geringer Anpresskraft betrieben. Die erfindungsgemäße Dichtungsanordnung zeichnet sich durch eine einfache Konstruktion aus, bei der kein Auffangen eines ausgeschleuderten Mediums erforderlich ist.

Nachfolgend wird die Erfindung an einem Ausführungsbeispiel näher erläutert. In der beigefügten Zeichnung zeigen:
- Fig. 1: eine Längsschnitt einer auf einen Trockenzylinder 3 aufgesetzten Druckhaube 2 mit einer Dichtungsanordnung und
- Fig. 2: einen Querschnitt einer weiteren auf einen Trockenzylinder 3 aufgesetzten Druckhaube 2.

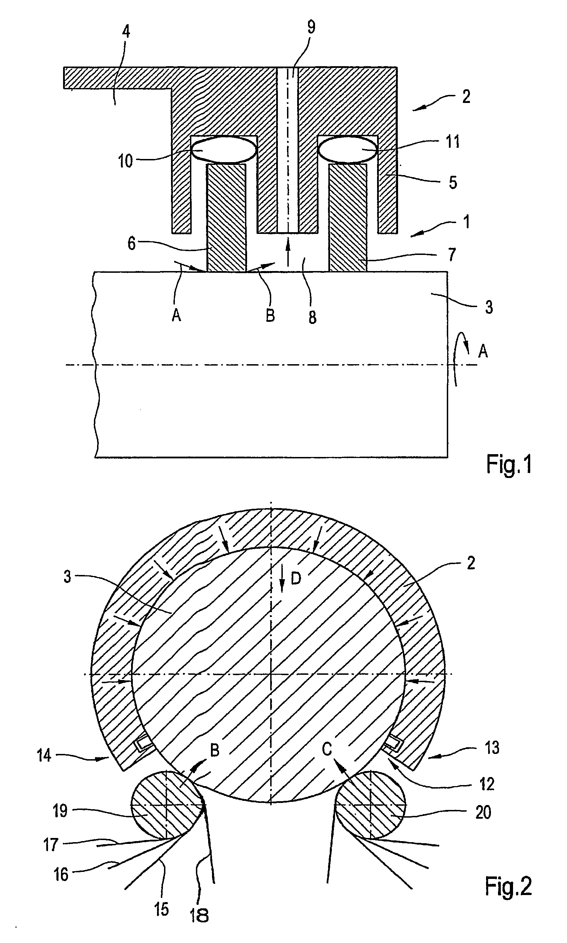

Eine Dichtungsanordnung 1 (Fig. 1) dichtet eine ortsfeste Druckhaube 2 gegen eine sich unter dieser hinwegdrehenden Trockenzylinder 3 ab. (Aus Gründen der einfacheren Darstellbarkeit sind die auf der Mantelfläche des Trockenzylinders 3 von diesem mitbewegte Faserstoffbahn, Siebe und ein undurchlässiges Band in Figur 1 nicht dargestellt.)

Die Druckhaube 2 enthält in ihrem Innenraum 4 ein unter Druck stehendes Fluid, einer Wandung 5 der Druckhaube 2 aufgenommen.

Die Dichtungsanordnung 1 umfasst zwei zwischen der Wandung 5 und der Oberfläche des Trockenzylinders 3 angeordnete Dichtungen 6, 7. Das in dem Innenraum 4 enthaltene Medium entweicht aufgrund des in dem Innenraum 4 enthaltenden Überdrucks und/oder aufgrund des zwischen der Unterseite der Dichtung 6 und der Mantelfläche des Trockenzylinders 3 bestehenden Spalts in Richtung der Pfeile A, B in eine Zwischenkammer 8 zwischen den beiden Dichtungen 6 und 7.

Die Zwischenkammer 8 ist mit einer Bohrung 9 in der Wandung 5 verbunden, über die das Medium, das in der Zwischenkammer 8 nicht mehr unter Druck oder nur noch unter einem deutlich geringeren Druck als in dem Innenraum 4 steht, beispielsweise unter einem Druck von weniger als 0,5 bar, abgepumpt oder abgeleitet werden kann.

Um ein Heraustreten des Mediums aus der Zwischenkammer 8 in den Außenbereich auf der anderen Seite der Wandung 5 zu verhindern, dient die Dichtung 7 als Sekundärdichtung. Die Dichtung 7 drückt mit einer geringen, eingestellten Anpresskraft gegen den Trockenzylinder 3. Die Anpresskraft ist dabei so gewählt, dass gewährleistet wird, dass das Druckmedium aus der Zwischenkammer 8 nicht oder allenfalls in geringen Mengen in den Außenraum entweicht. Das abgelaufene Medium kann auch gedrosselt werden, urn einen definierten Druck in der Zwischenkammer 8 zu gewährleisten.

Die Anpresskraft, die die Dichtungen 6, 7 gegen die Mantelfläche des Trockenzylinders 3 ausüben, wird mittels Federn 10, 11 eingestellt. Alternativ kann vorgesehen sein, dass der Druck durch ein unter Druck stehendes Medium anstelle der Federn 10, 11 mittels eines Pneumatik- oder Hydraulikzylinders auf die Dichtungen 6 bzw. 7 ausgeübt wird.
Die oben beschriebene Dichtungsanordnung 1 , bestehend aus einer Primärdichtung in Form der Dichtung 6 und einer Sekundärdichtung, der Dichtung 7, wird an der auf den Zylinder 3 aufgesetzten Druckhaube 2 (Fig. 2) in Form eines einzigen durchgehenden Dichtsystems 12 sowohl an Längskanten 13, 14 der Druckhaube parallel zur Längsachse des Zylinders 3 als auch an den stirnseitigen Kanten (nicht dargestellt) der Druckhaube 2 gegenüber dem Zylinder 3 angebracht.

Über den Trockenzylinder 3 wird zusammen mit Sieben 15, 16 unter einem dichten, für Flüssigkeiten und Gase undurchlässigen Band 17 eine Faserstoffbahn 18 geführt. Unterhalb des Zylinders 3 sind jeweils unter gleichem Abstand zur senkrechten Mittelachse des Zylinders 3 zwei Stützwalzen 19, 20 angebracht, die den Trockenzylinder 3 in Richtung von Pfeilen B, C gegen die in Richtung eines Pfeils D wirkende Gewichtskraft abstützen. Die Stützwalzen 19, 20 haben zudem eine Führungsfunktion für die Bahn 18, die Siebe 15,16 und das Band 17, indem diese um die Stützwalzen 19, 20 herumgeführt werden. Neben dem Band 17 können noch weitere umlaufende Bänder vorhanden sein. Das Band 17 hat "dichte Ränder", zumindest an seinen Seiten außerhalb des Bereichs, der von der Faserstoffbahn 18 bedeckt wird.

Das Dichtsystem 12 dichtet das Innere der Druckhaube 2 auf einem Teil des Umfangs des Trockenzylinders 3 gegen das undu rchlässige Band 17 ab, das die darunterliegenden Siebe 15, 16 und die Faserstoffbahn 18 abschirmt. Wenn die Anpresskraft, mit der die Stützwalzen 19, 20 gegen den Trockenzylinder 3 drücken, veränderbar ist, beispielsweise durch eine auf die Lager der Stützwalzen 19, 20 wirkende Betätigung durch hydraulische Zylinder, lässt sich auch die Pressung des Dichtsystems 12 gegenüber dem Band 17 verändern und einstellen.

Die erfindungsgemäße Dichtungsanordnung ist neben der Abdichtung gegen eine runde Fläche, wie sie bei einem Zylinder auftritt, ebenso auch zur Abdichtung gegen eine ebene Fläche geeignet.

## Patentansprüche

1. Trocknungsanordnung mit einem beheizten Zylinder (3) zur Aufheizung einer Papier-, Karton-, Tissue- oder einer anderen Faserstoffbahn (18) in einer Maschine zur Herstellung und/oder Veredlung der Faserstoffbahn (18), oberhalb dessen ein wenigstens teilweise auf dem Zylinder (3) abgestütztes Maschinenelement, insbesondere eine Druckhaube (2), angeordnet ist, die ein unter Druck stehendes Medium enthält, wobei zwischen dem Maschinenelement, insbesondere Druckhaube (2), und dem Zylinder (3) mindestens ein umlaufendes undurchlässiges Band (17) angeordnet ist und mit einer Dichtungsanordnung (1) zum Abdichten des Maschinenelements (2) gegenüber dem Zylinder (3) mit einer ersten, zwischen dem Maschinenelement, insbesondere Druckhaube (2), und dem Zylinder (3) liegenden Dichtung (6), wobei die erste Dichtung (6) durch das Medium geschmiert wird und wobei eine zweite Dichtung (7) vorgesehen ist, die von der ersten Dichtung (6) durch eine Zwischenkammer (8) getrennt und in der Richtung, in der das Medium aus dem Maschinenelement (2) entweicht, der ersten Dichtung (6) und der Zwischenkammer (8) nachgeordnet und für das Medium undurchlässig ist.

2. Trocknungsanordnung nach Anspruch 1,
**dadurch gekennzeichnet,**
**dass** das Medium unter einem Überdruck von 0,5 bar oder unter einem höheren Druck, insbesondere unter einem Überdruck von bis zu 5 bar, steht.

3. Trocknungsanordnung nach Anspruch 1 oder 2,
**dadurch gekennzeichnet,**
**dass** die erste Dichtung (6) mit einer dem Druck des Mediums wenigstens im wesentlichen entsprechenden Anpresskraft gegen den Zylinder (3) drückbar ist oder dass sie einen Spalt gegenüber der Oberfläche des Zylinders (3) aufweist, durch den Druckmedium fließt.

4. Trocknungsanordnung nach einem der Ansprüche 1 bis 3,
**dadurch gekennzeichnet,**
**dass** das Medium aus der Zwischenkammer (8) über eine Bohrung (9) abpumpbar oder gedrosselt oder ungedrosselt abführbar ist.

5. Trocknungsanordnung nach einem der Ansprüche 1 bis 4,
**dadurch gekennzeichnet,**
**dass** die zweite Dichtung (7) mit einem geringen Druck, insbesondere mit einem Druck von weniger als 2 bar, gegen den Zylinder (3) drückbar ist.

6. Trocknungsanordnung nach einem der Ansprüche 1 bis 5,
**dadurch gekennzeichnet,**
**dass** die Dichtungen (6, 7) mechanisch, insbesondere durch Federn (10, 11) oder durch ein unter Druck stehendes Fluid gegen den Zylinder (3) drückbar sind.

7. Trocknungsanordnung nach einem der Ansprüche 1 bis 6,
**dadurch gekennzeichnet,**
**dass** die Dichtungen (6, 7) bei Temperaturen des Druckmediums bis 100 °C betreibbar sind.

8. Trocknungsanordnung nach einem der Ansprüche 1 bis 7,
**dadurch gekennzeichnet,**
**dass** der Zylinder (3) drehend oder gleitend beweglich gegenüber dem Maschinenelement (2), insbesondere der Druckhaube (2), angeordnet ist.

## Claims

1. Drying system having a heated cylinder (3) for heating a paper, board, tissue or another fibrous web (18) in a machine for producing and/or finishing the fibrous web (18), above which cylinder there is arranged a machine element supported at least partly on the cylinder (3), in particular a pressure hood (2), which contains a medium under pressure, there being arranged between the machine element, in particular pressure hood (2), and the cylinder (3) at least one circulating impermeable belt (17), and having a sealing arrangement (1) for sealing off the machine element (2) with respect to the cylinder (3), with a first seal (6) located between the machine element, in particular pressure hood (2), and the cylinder (3), the first seal (6) being lubricated by the medium and a second seal (7) being provided which is separated from the first seal (6) by an intermediate chamber (8), and the first seal (6) and the intermediate chamber (8) being arranged downstream in the direction in which the medium escapes from the machine element (2) and being impermeable to the medium.

2. Drying system according to Claim 1, **characterized in that** the medium is under a positive pressure of 0.5 bar or under a higher pressure, in particular under a positive pressure of up to 5 bar.

3. Drying system according to Claim 1 or 2, **characterized in that** the first seal (6) can be pressed against the cylinder (3) with a contact force corresponding at least substantially to the pressure of the medium, or **in that** it has a gap with respect to the surface of the cylinder (3) through which pressurized medium flows.

4. Drying system according to one of Claims 1 to 3, **characterized in that** the medium can be pumped away from the intermediate chamber (8) via a drilled hole (9) or can be carried away with or without being restricted.

5. Drying system according to one of Claims 1 to 4, **characterized in that** the second seal (7) can be pressed against the cylinder (3) with a lower pressure, in particular with a pressure of less than 2 bar.

6. Drying system according to one of Claims 1 to 5, **characterized in that** the seals (6, 7) can be pressed against the cylinder (3) mechanically, in particular by means of springs (10, 11) or by means of a fluid under pressure.

7. Drying system according to one of Claims 1 to 6, **characterized in that** the seals (6, 7) can be operated with temperatures of the pressurized medium of up to 100°C.

8. Drying system according to one of Claims 1 to 7, **characterized in that** the cylinder (3) is arranged such that it can be moved in rotation or by sliding with respect to the machine element (2), in particular the pressure hood (2).

## Revendications

1. Système de séchage qui présente un cylindre chauffé (3) qui chauffe une nappe (18) de papier, de carton, de tissu ou d'une autre matière fibreuse dans une machine de fabrication et/ou de finition de la nappe (18) de matière fibreuse et au-dessus duquel est disposé un élément de machine, en particulier un capot (2) en surpression soutenu au moins partiellement sur le cylindre (3) et qui contient une fluide placé sous pression, au moins une bande imperméable (17) en boucle fermée étant disposée entre l'élément de machine et en particulier le capot (2) en surpression et le cylindre (3), le système de séchage présentant un dispositif d'étanchéité (1) destiné à assurer l'étanchéité de l'élément de machine (2) par rapport au cylindre (3) par un premier joint d'étanchéité (6) situé entre l'élément de machine, en particulier le capot (2) en surpression, et le cylindre (3), le premier joint d'étanchéité (6) étant lubrifié par le fluide, un deuxième joint d'étanchéité (7) séparé du premier joint d'étanchéité (6) par une chambre intermédiaire (8) étant disposé en aval du premier joint d'étanchéité (6) et de la chambre intermédiaire (8) dans la direction dans laquelle le fluide s'échappe de l'élément de machine (2) et étant imperméable au fluide.

2. Système de séchage selon la revendication 1, **caractérisé en ce que** le fluide est placé sous une surpression de 0,5 bar ou sous une surpression plus élevée et en particulier sous une surpression qui peut atteindre 5 bars.

3. Système de séchage selon les revendications 1 ou 2, **caractérisé en ce que** le premier joint d'étanchéité (6) peut être repoussé contre le cylindre (3) par une force de poussée qui correspond au moins essentiellement à la pression du fluide ou **en ce qu'**il présente par rapport à la surface du cylindre (3) un interstice par lequel s'écoule le fluide sous pression.

4. Système de séchage selon l'une des revendications 1 à 3, **caractérisé en ce qu'**un alésage (9) permet d'évacuer le fluide par pompage, de manière étranglée ou non, de la chambre intermédiaire (8).

5. Système de séchage selon l'une des revendications 1 à 4, **caractérisé en ce que** le deuxième joint d'étanchéité (7) peut être repoussé contre le cylindre (3) sous une faible pression et en particulier sous une pression inférieure à 2 bars.

6. Système de séchage selon l'une des revendications 1 à 5, **caractérisé en ce que** les joints d'étanchéité (6, 7) peuvent être repoussés contre le cylindre (3) mécaniquement, en particulier par des ressorts (10, 11) ou par un fluide mis sous pression.

7. Système de séchage selon l'une des revendications 1 à 6, **caractérisé en ce que** les joints d'étanchéité (6, 7) peuvent fonctionner à une température du fluide sous pression qui peut atteindre 100°C.

8. Système de séchage selon l'une des revendications 1 à 7, **caractérisé en ce que** le cylindre (3) se déplace par rotation ou glissement par rapport à l'élément de machine (2) et en particulier par rapport au capot (2) en surpression.
